(19) Europäisches Patentamt / European Patent Office / Office européen des brevets

(11) **EP 4 697 265 A1**

(12) **EUROPEAN PATENT APPLICATION**
published in accordance with Art. 153(4) EPC

(43) Date of publication:
**18.02.2026 Bulletin 2026/08**

(21) Application number: **24825215.7**

(22) Date of filing: **18.06.2024**

(51) International Patent Classification (IPC):
*G06T 7/50* (2017.01)

(86) International application number:
**PCT/CN2024/099715**

(87) International publication number:
**WO 2024/260320 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 CN 202310744488**

(71) Applicant: **Shanghai Huace Navigation
Technology Ltd
Shanghai 201702 (CN)**

(72) Inventors:
• **REN, Gaoyue**
  **Shanghai 201702 (CN)**
• **WU, Xiaomeng**
  **Shanghai 201702 (CN)**
• **DUAN, Rui**
  **Shanghai 201702 (CN)**
• **YAN, Lingyun**
  **Shanghai 201702 (CN)**

(74) Representative: **HGF
HGF Limited
4th Floor, 1 City Square
Leeds LS1 2ES (GB)**

(54) **METHOD FOR CALCULATING VEHICLE HEADING ANGLE IN ROAD SURFACE ENVIRONMENT OF FARMLAND**

(57) Provided is a method for calculating a vehicle heading angle in a road surface environment of farmland. The method includes acquiring (110, 210) a current road surface image in front of a to-be-controlled vehicle by using a camera disposed on the to-be-controlled vehicle, and determining multiple currently processed road surface points according to the current road surface image; acquiring (120, 220) the position state of each currently processed road surface point, a first height value of the camera from the ground, a preset parameter of the camera, and description information of the each currently processed road surface point in the current road surface image; determining (130, 230) the depth estimation value of the each currently processed road surface point according to the position state, the first height value of the camera from the ground, the preset parameter, and the description information, and determining a current heading angle matching the each currently processed road surface point according to the depth estimation value; and determining (140, 260) a target heading angle matching the current road surface image according to multiple current heading angles corresponding to the multiple currently processed road surface points.

Acquire a current road surface image in front of a to-be-controlled vehicle by using a camera disposed on the to-be-controlled vehicle, and determine multiple currently processed road surface points according to the current road surface image — S110

Acquire the position state of each currently processed road surface point, a first height value of the camera from ground, a preset parameter of the camera, and description information of the each currently processed road surface point in the current road surface image — S120

Determine the depth estimation value of the each currently processed road surface point according to the position state, the first height value of the camera from the ground, the preset parameter, and the description information, and determine a current heading angle matching the each currently processed road surface point according to the depth estimation value — S130

Determine a target heading angle matching the current road surface image according to multiple current heading angles corresponding to the multiple currently processed road surface points — S140

**FIG. 1A**

## Description

This application claims priority to Chinese Patent Application No. 202310744488.8 filed with the China National Intellectual Property Administration (CNIPA) on Jun. 21, 2023, the disclosure of which is incorporated herein by reference in its entirety.

TECHNICAL FIELD

This application relates to the technical field of vehicle navigation, for example, to a method for calculating a vehicle heading angle in a road surface environment of farmland.

BACKGROUND

In traditional agricultural planting, agricultural machinery is required to travel along a navigation line in the field in certain scenarios. The agricultural machinery may estimate depth information of target points on the navigation line by capturing images along a visual axis during operation, thereby obtaining heading information.

Due to the lack of depth information in a monocular camera, acquiring depth information from sequential images is a key focus in current research. At present, commonly used monocular camera depth estimation methods are divided into two categories: traditional methods and deep learning-based methods. The traditional method mainly involves capturing images around an object and constructing a dense point cloud through three-dimensional reconstruction to obtain depth information of the target points. Since vehicles generally move along the visual axis direction in farmland environments and cannot perform image capturing around the object, this method performs poorly in such scenarios. The deep learning method relies on large-scale data for network model training, and the dataset generally includes monocular images and corresponding ground-truth depth values. If the training samples are not sufficiently large, the resulting trained model performs poorly.

In summary, the related art has the following drawbacks: Depth estimation accuracy is poor due to reliance on three-dimensional reconstruction when capturing is performed along the visual axis, or depth estimation accuracy is poor due to the reliance on the training sample size where an insufficient training sample size leads to poor model training performance.

SUMMARY

This application provides a method for calculating a vehicle heading angle in a road surface environment of farmland to obtain more accurate estimated depth information, thereby improving the accuracy of the navigation angle during vehicle travel.

According to one aspect of this application, a method for calculating a vehicle heading angle in a road surface environment of farmland is provided. The method includes the steps below.

A current road surface image in front of a to-be-controlled vehicle is acquired by using a camera disposed on the to-be-controlled vehicle, and multiple currently processed road surface points are determined according to the current road surface image.

The position state of each currently processed road surface point, a first height value of the camera from the ground, a preset parameter of the camera, and description information of each currently processed road surface point in the current road surface image are acquired.

The depth estimation value of each currently processed road surface point is determined according to the position state, the first height value of the camera from ground, the preset parameter, and the description information, and a current heading angle matching each currently processed road surface point is determined according to the depth estimation value.

A target heading angle matching the current road surface image is determined according to multiple current heading angles corresponding to the multiple currently processed road surface points.

According to another aspect of this application, a vehicle control method is provided. The method includes the steps below.

A target heading angle corresponding to a current road surface image is acquired.

A to-be-controlled vehicle is controlled to drive by using the target heading angle.

The target heading angle corresponding to the current road surface image is acquired using the method for calculating a vehicle heading angle in a road surface environment of farmland according to any embodiment of this application.

According to another aspect of this application, an apparatus for calculating a vehicle heading angle in a road surface environment of farmland is provided. The apparatus includes a currently processed point determination module, an information acquisition module, a current heading angle determination module, and a target heading angle determination module.

The currently processed point determination module is configured to acquire a current road surface image in front of a to-be-controlled vehicle by using a camera disposed on the to-be-controlled vehicle and determine multiple currently processed road surface points according to the current road surface image.

The information acquisition module is configured to acquire the position state of each currently processed road surface point, a first height value of the camera from ground, a preset parameter of the camera, and description information of each currently processed road surface point in the current road surface image.

The current heading angle determination module is configured to determine the depth estimation value of each currently processed road surface point according to the position state, the first height value of the camera from the ground, the preset parameter, and the description information and determine a current heading angle matching each currently processed road surface point according to the depth estimation value.

The target heading angle determination module is configured to determine a target heading angle matching the current road surface image according to multiple current heading angles corresponding to the multiple currently processed road surface points.

According to another aspect of this application, a vehicle driving control apparatus is provided. The apparatus includes a current heading angle acquisition module and a vehicle control module.

The current heading angle acquisition module is configured to acquire a target heading angle corresponding to a current road surface image.

The vehicle control module is configured to control a to-be-controlled vehicle to drive by using the target heading angle.

The target heading angle corresponding to the current road surface image is acquired using the method for calculating a vehicle heading angle in a road surface environment of farmland according to any embodiment of this application.

According to another aspect of this application, an electronic device is provided.

The electronic device includes at least one processor and a memory communicatively connected to the at least one processor.

The memory stores a computer program executable by the at least one processor, and the computer program is configured to, when executed by the at least one processor, cause the at least one processor to execute the method for calculating a vehicle heading angle in a road surface environment of farmland according to any embodiment of this application and the vehicle driving control method according to any embodiment of this application.

According to another aspect of this application, a computer-readable storage medium is provided. The computer-readable storage medium stores computer instructions that, when executed by a processor, implement the method for calculating a vehicle heading angle in a road surface environment of farmland according to any embodiment of this application and the vehicle driving control method according to any embodiment of this application.

BRIEF DESCRIPTION OF DRAWINGS

The drawings used in the description of the embodiments will be briefly described below.

FIG. 1A is a flowchart of a method for calculating a vehicle heading angle in a road surface environment of farmland according to embodiment one of this application.

FIG. 1B is a diagram of pixel coordinates of a navigation line according to embodiment one of this application.

FIG. 1C is a diagram illustrating the principle of depth estimation of a ground point in a horizontal road section according to embodiment one of this application.

FIG. 1D is a diagram illustrating the principle of depth estimation of a ground point in an uphill road section according to embodiment one of this application.

FIG. 1E is a diagram illustrating the principle of depth estimation of a ground point in a downhill road section according to embodiment one of this application.

FIG. 1F is a first diagram illustrating the principle of depth estimation of a suspended point according to embodiment one of this application.

FIG. 1G is a second diagram illustrating the principle of depth estimation of a suspended point according to embodiment one of this application.

FIG. 1H is a third diagram illustrating the principle of depth estimation of a suspended point according to embodiment one of this application.

FIG. 2A is a flowchart of another method for calculating a vehicle heading angle in a road surface environment of farmland according to embodiment two of this application.

FIG. 2B is a diagram illustrating that a depth estimation value is converted into a camera coordinate system according to embodiment two of this application.

FIG. 2C is a diagram illustrating the simulation of farmland ground according to embodiment two of this application.

FIG. 2D is a flowchart of the application of a depth estimation method according to embodiment two of this application.

FIG. 3 is a flowchart of a vehicle driving control method according to embodiment three of this application.

FIG. 4 is a diagram illustrating the structure of an apparatus for calculating a vehicle heading angle in a road surface environment of farmland according to embodiment four of this application.

FIG. 5 is a diagram illustrating the structure of a vehicle driving control apparatus according to embodiment five of this application.

FIG. 6 is a diagram illustrating the structure of a vehicle implementing a method for calculating a vehicle heading angle in a road surface environment of farmland and a vehicle driving control method according to an embodiment of this application.

DETAILED DESCRIPTION

Solutions in the embodiments of this application will be described in conjunction with the drawings in the embodiments of this application. The embodiments described below are part, not all, of the embodiments of this application. Based on the embodiments of this application, all other embodiments acquired by those of ordinary skill in the art without creative work are within the scope of this application.

The terms such as "first" and "second" in the description, claims, and preceding drawings of this application are used to distinguish between similar objects and are not necessarily used for describing a particular order or sequence. It is to be understood that the data used in this manner is interchangeable where appropriate so that the embodiments of this application described herein may also be implemented in a sequence other than those illustrated or described herein. Additionally, terms "comprising", "including", and any other variations thereof are intended to encompass a non-exclusive inclusion. For example, in addition to a process, method, system, product, or device that includes a series of steps or units illustrated in the embodiments of this application, other processes, methods, systems, products, or devices that do not explicitly list this series of steps or units, or other steps or units inherent to such a process, methods, system, product, or device, may also be included.

Embodiment one

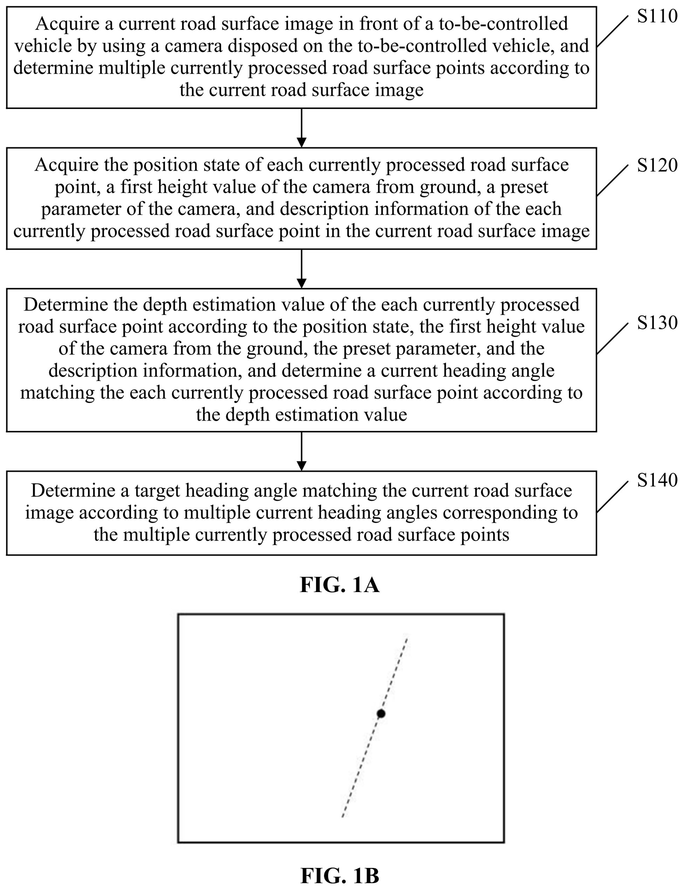

FIG. 1A is a flowchart of a method for calculating a vehicle heading angle in a road surface environment of farmland according to embodiment one of this application. This embodiment is applicable to the case where navigation and driving control are performed on a vehicle. The method may be executed by an apparatus for calculating a vehicle heading angle in a road surface environment of farmland. This apparatus may be implemented in the form of hardware and/or software and may be configured in an electronic device, such as a vehicle controller of a vehicle. As shown in FIG. 1A, the method includes S110 to S 140.

In S110, a current road surface image in front of a to-be-controlled vehicle is acquired by using a camera disposed on the to-be-controlled vehicle, and multiple currently processed road surface points are determined according to the current road surface image.

The to-be-controlled vehicle may be, for example, an agricultural machine. The camera may be fixedly disposed at a position such as the roof of the to-be-controlled vehicle and may also be configured with an Inertial Measurement Unit (IMU) and a Global Navigation Satellite System (GNSS). The camera may be, for example, a monocular camera. The current road surface image may be, for example, a road surface image in front of the agricultural machine when the agricultural machine is traveling in a farmland scene.

Optionally, determining the multiple currently processed road surface points according to the current road surface image may include acquiring pixel coordinates of a current road surface navigation line and multiple pixel points on the current road surface navigation line according to the current road surface image and sequentially determining the multiple pixel points as the multiple currently processed road surface points.

The pixel coordinates of the navigation line at the center of the field ridge may be acquired by a visual perception method, as shown by the dashed line in FIG. 1B. Since most of the extracted pixel points are ground points, the currently processed road surface points may be sequentially determined from the extracted pixel points.

In S120, a position state of each currently processed road surface point, a first height value of the camera from ground, a preset parameter of the camera, and description information of each currently processed road surface point in the current road surface image are acquired.

The position state of the currently processed road surface point may include the following: The currently processed road surface point is on a horizontal road section, the currently processed road surface point is on an uphill road section, or the currently processed road surface point is on a downhill road section.

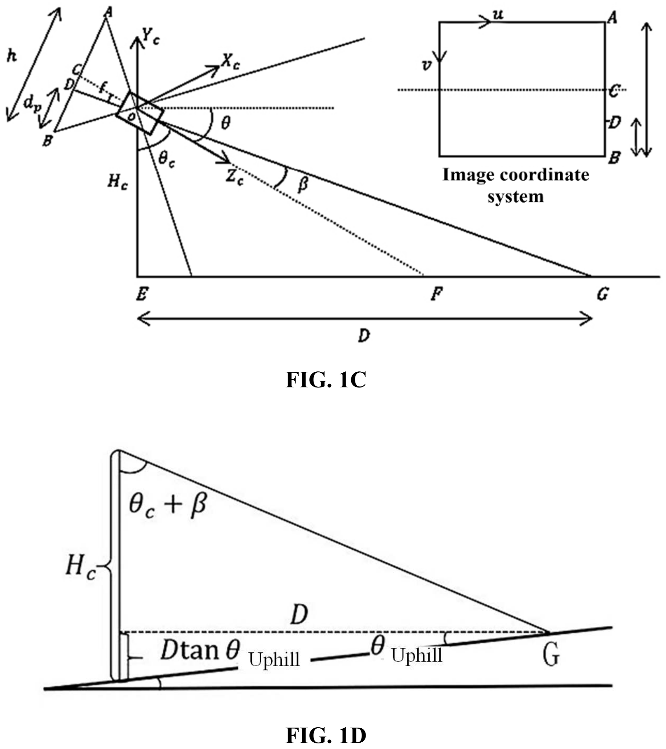

The preset parameter of the camera may include a focal length value and a first included angle between a visual axis direction of the camera and a vertical direction. Taking FIG. 1C as an example, the range of AO and BO represents a field of view angle of the camera. OF represents the direction of the visual axis $Z_c$ of the camera coordinate system of the camera. OC represents a ray of the visual axis $Z_c$ projected into image AB, with a projection point C. The line segment OC represents the focal length value f of the camera. OG represents a ray from the camera to a ground point G (equivalent to the currently processed road surface point). The first included angle is equivalent to $\theta_c$ in FIG. 1C.

The description information may include an image first height value of the current road surface image and a first distance value of the currently processed road surface point from the bottom of the current road surface image. The image first height value of the current road surface image is equivalent to h in FIG. 1C, and the first distance value is equivalent to $d_p$.

In S130, the depth estimation value of each currently processed road surface point is determined according to the position state, the first height value of the camera from the ground, the preset parameter, and the description information, and a current heading angle matching each currently processed road surface point is determined according to the depth estimation value.

In an optional implementation, determining the depth estimation value of each currently processed road surface point according to the position state, the first height value of the camera from the ground, the preset parameter, and the description information may include determining a second included angle between a line-of-sight direction in which the camera views each currently processed road surface point and the vertical direction according to the focal length value, the first included angle, the image first height value of the current road surface image, and the first distance value; determining, based on the position state, a vertical distance between the camera and each currently processed road surface point according to the first height value of the camera from the ground; and determining the depth estimation value of each currently processed road surface point according to the second included angle and the vertical distance.

Since the camera and the currently processed road surface point are not on the same horizontal plane, a vertical distance may actually exist between the camera and the currently processed road surface point.

Based on the preceding optional implementations, determining the second included angle between the line-of-sight direction in which the camera views each currently processed road surface point and the vertical direction according to the focal length value, the first included angle, the image first height value of the current road surface image, and the first distance value may include determining, in an image coordinate system, a second distance value between a first mapping point of each currently processed road surface point in the current road surface image and a second mapping point of the visual axis direction of the camera in the current road surface image according to the image first height value of the current road surface image and the first distance value; determining a third included angle between the visual axis direction of the camera and the line-of-sight direction in which the camera views each currently processed road surface point according to the second distance value and the focal length value; and determining the sum of the first included angle and the third included angle as the second included angle.

The second included angle is equivalent to $\theta_c + \beta$ in FIG. 1C. The second distance value is

$$|CD| = \frac{h}{2} - d_p,$$ where h represents the image first height value of the current road surface image, and $d_p$ represents the pixel value from the ground point G = (u, v) to the bottom of the image, that is, the first distance value, as shown by DB in the image coordinate system on the right side of FIG. 1C. The line segment OC represents the focal length value f, that is, |OC| = f. Therefore, the third

included angle $\beta = arctan\left(\frac{|CD|}{f}\right)$, thereby obtain-

ing the second included angle

$$\theta_c + \beta = \theta_c + arctan\left(\frac{\frac{h}{2} - d_p}{f}\right).$$

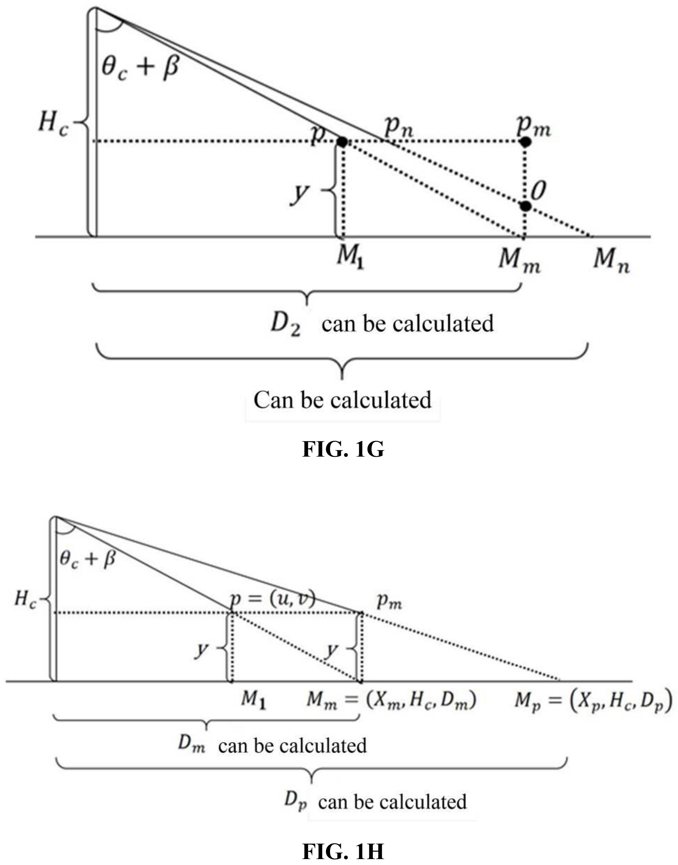

Based on the preceding optional implementations, in a case where the position state is that the currently processed road surface point is on a horizontal road section, the first height value of the camera from the ground is directly determined as the vertical distance. With reference to FIG. 1C, G is equivalent to the currently processed road surface point, and G is located on a horizontal road section. In this case, the first height value of the camera from the ground and the vertical distance between the camera and G are the same, both being $H_c$.

Correspondingly, determining the depth estimation value of each currently processed road surface point according to the second included angle and the vertical distance may include determining the depth estimation value of each currently processed road surface point by $D = H_c \tan(\theta_c + \beta)$, where D represents the depth estimation value, $H_c$ represents the first height value of the camera from the ground, $\theta_c + \beta$ represents the second included angle, $\theta_c$ represents the first included angle, and β represents a third included angle.

Based on the preceding optional implementations, in another case where the position state is that the currently processed road surface point is on an uphill road section, the vertical distance is determined by $H_c - D \tan\theta_{uphill}$, where $\theta_{uphill}$ represents an uphill slope angle of the uphill road section. With reference to FIG. 1D, the currently processed road surface point G is located on the uphill road section, and the uphill slope angle of the uphill road section is $\theta_{uphill}$. In this case, the first height value of the camera from the ground is $H_c$, but the vertical distance between the camera and G is $H_c - D \tan\theta_{uphill}$.

Correspondingly, determining the depth estimation value of the currently processed road surface point according to the second included angle and the vertical distance may include determining the depth estimation value by $D = (H_c - D \tan\theta_{uphill}) \tan(\theta_c + \beta)$.

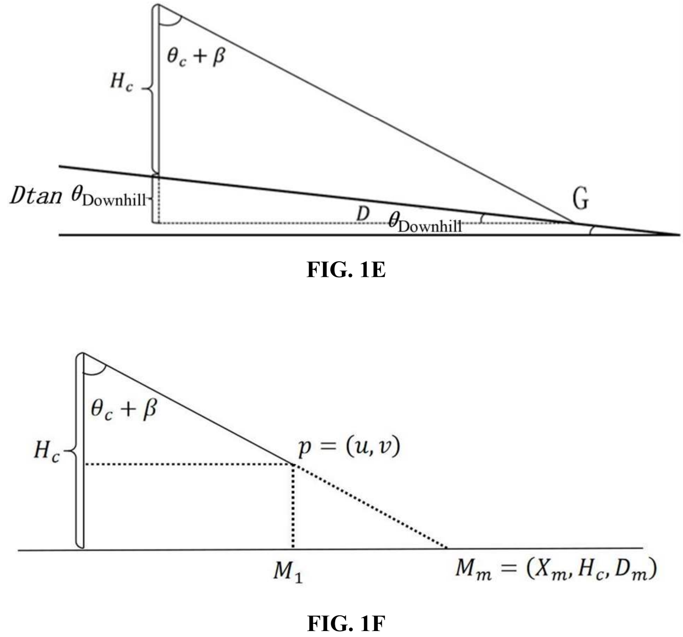

Based on the preceding optional implementations, in another case where the position state is that the currently processed road surface point is on a downhill road section, the vertical distance is determined by $H_c + D \tan\theta_{downhill}$, where $\theta_{downhill}$ represents a downhill slope angle of the downhill road section. With reference to FIG. 1E, the currently processed road surface point G is located on the downhill road section, and the downhill slope angle of the downhill road section is $\theta_{downhill}$. In this case, the first height value of the camera from the ground is $H_c$, but the vertical distance between the camera and G is $H_c + D \tan\theta_{downhill}$.

Correspondingly, determining the depth estimation value of each currently processed road surface point according to the second included angle and the vertical distance may include determining the depth estimation value by $D = (H_c + D \tan \theta_{downhill} \tan(\theta_c + \beta))$.

Based on the preceding optional implementations, another case where the position state is that the currently processed road surface point is at a suspended point (the suspended point may be a pixel point obtained after the road surface is covered) may exist. In this case, a second height value of the suspended point from the ground is determined according to an actual pixel coordinate of the currently processed road surface point in the current road surface image, and the depth estimation value of the suspended point is determined according to the second included angle, the second height value, and the first height value of the camera from the ground.

Exemplarily, with reference to FIG. 1F, FIG. 1G, and FIG. 1H, if the height of a seedling covers the field ridge, the pixel point extracted by a visual perception module is a suspended point, not a real ground point. Therefore, a case where the currently processed road surface point is at a suspended point exists. In this case, calculation may be performed in the following manner. Specifically, the calculation requires current road surface images of the preceding and following two frames together. An example where the camera coordinate system of a point $p_m$ is calculated is used for illustration.

With reference to FIG. 1F, point $p$ is a suspended point, and its pixel coordinate is known, so angle $\beta$ can be calculated. If calculation continues according to $D = H_c \tan(\theta_c + \beta)$, the depth estimation value calculated in this case is the depth estimation value $D_m$ of $M_m$. Next, the pixel coordinate of $p_m$ corresponding to $M_m$ is solved.

With reference to FIG. 1G, from point p, calculation is performed with the method in FIG. 1F, and the depth estimation value on the extension line corresponding to each point (for example, $p_n$ and $p_m$) can be calculated (as shown in FIG. 1G). $p_n$ represents a pixel point from point p, $M_n$ is a point on the extension line of $p_n$, and the depth estimation value of $M_n$ can be calculated. In $\Delta OM_mM_n$, the length of $M_mM_n$ is the difference between the depth estimation value of $M_m$ and the depth estimation values of $M_n$, and the length of $OM_m$ can be calculated by similar triangles as follows:

$$\frac{D_{M_n} - D_{M_m}}{D_{M_n}} = \frac{|OM_m|}{H_c}.$$

Since the pixel value of $p_m$ corresponding to $M_m$ is unknown, each time a suspended point is extracted, the y value of the point is considered as the y value of $p_n$, and the depth estimation value of the suspended point is equal to the depth estimation value of $M_m$. Then, pixel coordinate v of the suspended point can be obtained by the following formula:

$$\begin{pmatrix} u \\ v \\ 1 \end{pmatrix} = K \begin{pmatrix} X_1/Z_1 \\ Y_1/Z_1 \\ 1 \end{pmatrix}, \text{ where K}$$

represents the intrinsic parameter matrix of the camera, and $Y_1$ and $Z_1$ are known.

If the value of the pixel coordinate v of the suspended point is not equal to the pixel coordinate v of $p_n$, this point is not the pixel coordinates $p_m$ corresponding to $M_m$. If the value of the pixel coordinate v of the suspended point is equal to the pixel coordinate v of $p_n$, this point is the pixel coordinates $p_m$ corresponding to $M_m$. In this case, the camera coordinate system of $p_m$ is also fully known. The y value is $|OM_m|$, z is the length of $M_m$, and the x-axis value can be obtained by a normalized

coordinate system: $\begin{pmatrix} X_1/Z_1 \\ Y_1/Z_1 \\ 1 \end{pmatrix} = K^T \begin{pmatrix} u \\ v \\ 1 \end{pmatrix}$, where K

represents the intrinsic parameter matrix of the camera, pixel coordinates u and v of $p_m$ are known, and $Y_1$ and $Z_1$ are known, so the value of $X_1$ can be calculated. $X_1$, $Y_1$, and $Z_1$ are coordinates of the suspended point in the three directions of X, Y, and Z in the camera coordinate system, respectively. The final result is shown in FIG. 1H.

The current heading angle matching the currently processed road surface point is determined according to the depth estimation value.

In S140, a target heading angle matching the current road surface image is determined according to multiple current heading angles corresponding to the multiple currently processed road surface points.

In this embodiment, after all pixel points of the navigation line are sequentially processed as currently processed road surface points, multiple current heading angles can be obtained, and then the target heading angle matching the current road surface image is determined according to the multiple current heading angles.

In an optional implementation, determining the target heading angle matching the current road surface image according to the multiple current heading angles corresponding to the multiple currently processed road surface points may include filtering out current heading angles exceeding a preset offset threshold from the multiple current heading angles to obtain remaining current heading angles; calculating the average value of the remaining current heading angles, and determining the average value as a current backup heading angle matching the current road surface image; and performing coordinate system conversion on the current backup heading angle to obtain a target heading angle in a geographic coordinate system.

Since many pixel points are extracted, heading angles corresponding to all pixel points satisfying accuracy requirements may be acquired. If the angle information corresponding to one pixel point differs greatly from the other pixel points, this pixel point is removed. Due to calculation errors and systematic errors, the obtained heading angles are not unique, so the average value of the heading angles corresponding to the remaining pixel points is calculated to obtain final heading information corresponding to the current road surface image (that is, the current backup heading angle). If the road ahead is a curve, the curve may be divided into multiple straight lines, and the heading angle of the straight line closest to the front of the vehicle is calculated. The remaining points may be calculated when the vehicle travels nearby later. Finally, the final heading information is converted into the geographic coordinate system. The conversion relationship between the two is as follows:

$$P_{utm} = T_{cam}^{utm} P_{cam}$$

, where $T_{cam}^{utm}$ can be obtained by the GNSS combined information, and $P_{cam}$ is the target heading angle in the camera coordinate system calculated by the preceding technical solutions.

In the technical solution of the embodiment of the present application, a current road surface image in front of a to-be-controlled vehicle is acquired by using a camera disposed on the to-be-controlled vehicle, and multiple currently processed road surface points are determined according to the current road surface image; the position state of a currently processed road surface point, a first height value of the camera from the ground, a preset parameter of the camera, and description information of the currently processed road surface point in the current road surface image are acquired; the depth estimation value of the currently processed road surface point is determined according to the position state, the first height value of the camera from the ground, the preset parameter, and the description information, and a current heading angle matching the currently processed road surface point is determined according to the depth estimation value; and a target heading angle matching the current road surface image is determined according to multiple current heading angles corresponding to the multiple currently processed road surface points. Since the position state of each currently processed road surface point and the parameters of the camera are considered, the problem in the related art of poor depth estimation accuracy due to reliance on three-dimensional reconstruction when capturing is performed along the visual axis, or poor depth estimation accuracy due to the reliance on the training sample size where an insufficient training sample size leads to poor model training performance, is solved, and more accurate estimated depth information is obtained, thereby improving the accuracy of the navigation angle during vehicle travel.

Embodiment two

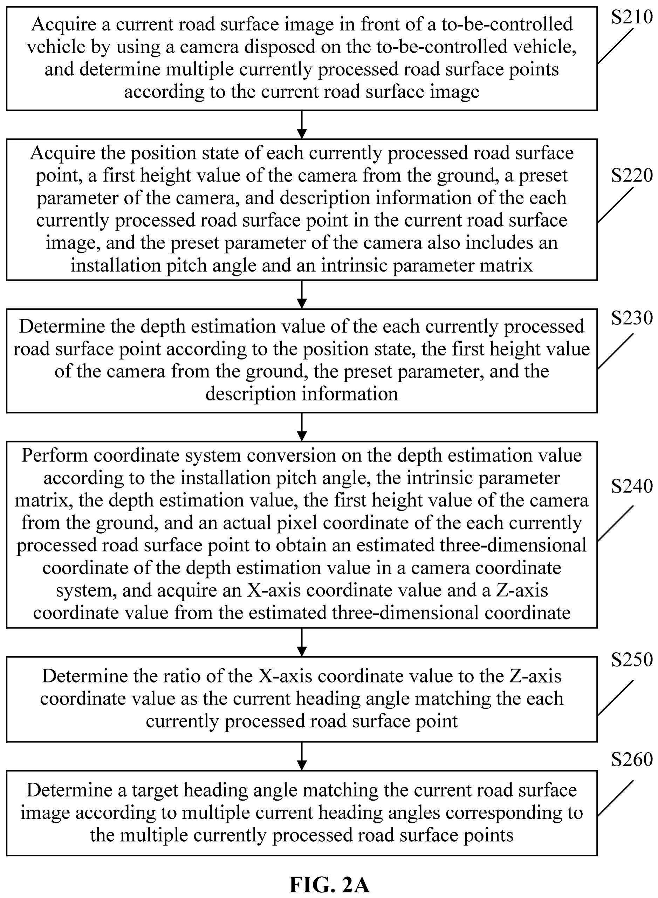

FIG. 2A is a flowchart of another method for calculating a vehicle heading angle in a road surface environment of farmland according to embodiment two of this application. This embodiment refines the determination of a current heading angle matching a currently processed road surface point according to a depth estimation value based on the preceding embodiment. As shown in FIG. 2A, the method includes S210 to S260.

In S210, a current road surface image in front of a to-be-controlled vehicle is acquired by using a camera disposed on the to-be-controlled vehicle, and multiple currently processed road surface points are determined according to the current road surface image.

In S220, the position state of each currently processed road surface point, a first height value of the camera from the ground, a preset parameter of the camera, and description information of each currently processed road surface point in the current road surface image are acquired, and the preset parameter of the camera also includes an installation pitch angle and an intrinsic parameter matrix.

In S230, the depth estimation value of each currently processed road surface point is determined according to the position state, the first height value of the camera from the ground, the preset parameter, and the description information.

In S240, coordinate system conversion is performed on the depth estimation value according to the installation pitch angle, the intrinsic parameter matrix, the depth estimation value, the first height value of the camera from the ground, and an actual pixel coordinate of each currently processed road surface point to obtain an estimated three-dimensional coordinate of the depth estimation value in a camera coordinate system, and an X-axis coordinate value and a Z-axis coordinate value are acquired from the estimated three-dimensional coordinate.

In an optional implementation, performing the coordinate system conversion on the depth estimation value according to the installation pitch angle, the intrinsic parameter matrix, the depth estimation value, the first height value of the camera from the ground, and the actual pixel coordinate of each currently processed road surface point to obtain the estimated three-dimensional coordinate of the depth estimation value in the camera coordinate system may include obtaining a Z-axis coordinate by $Z_1 = D \cos \gamma + H_c \sin \gamma$, where $D$ represents the depth estimation value, $\gamma$ represents the installation pitch angle, and $H_c$ represents the first height value of the camera from the ground; obtaining a Y-axis coordinate by $Y_1 = H_c \cos \gamma - D \sin \gamma$; and obtaining an X-axis co-

ordinate by $\begin{pmatrix} X_1/Z_1 \\ Y_1/Z_1 \\ 1 \end{pmatrix} = K^T \begin{pmatrix} u_{actual} \\ v_{actual} \\ 1 \end{pmatrix}$, where $K$

represents the intrinsic parameter matrix, and $u_{actual}$ and $v_{actual}$ represent actual pixel coordinates of each currently processed road surface point.

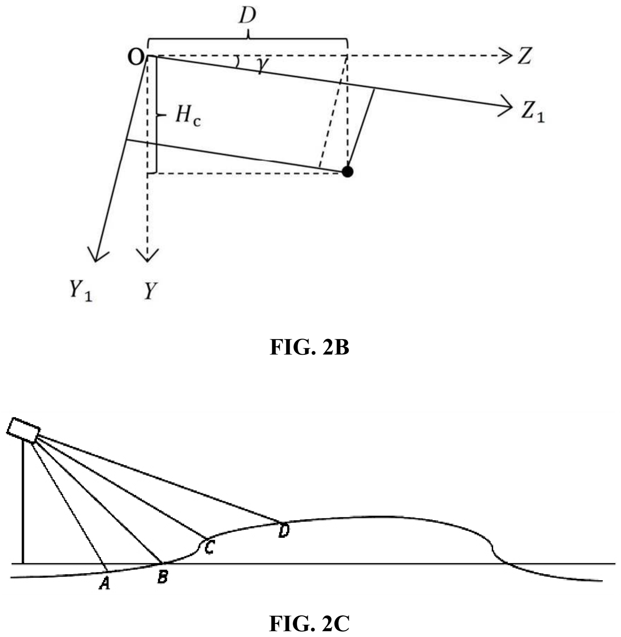

Since the camera may not be completely parallel to the ground and has a certain angle (as shown in FIG. 2B), the depth estimation value needs to be converted into the camera coordinate system to calculate the estimated three-dimensional coordinate of the depth estimation value in the camera coordinate system. The specific calculation method is shown in FIG. 2B. OZY represents an original camera coordinate system, and $OZ_1Y_1$ represents a camera coordinate system when the camera has an installation angle. $Z_1 = D \cos \gamma + H_c \sin \gamma$, and $Y_1 = H_c \cos \gamma - D \sin \gamma$. Since the relationship between normalized coordinates and pixel coordinates in the camera coordinate system is as follows:

$$\begin{pmatrix} X_1/Z_1 \\ Y_1/Z_1 \\ 1 \end{pmatrix} = K^T \begin{pmatrix} u_{actual} \\ v_{actual} \\ 1 \end{pmatrix}$$, the ratio constant of the camera coordinate system $X_1/Z_1$ can be obtained by inputting the actual pixel coordinates, thereby obtaining the value of $X_1$.

In S250, the ratio of the X-axis coordinate value to the Z-axis coordinate value is determined as the current heading angle matching each currently processed road surface point.

Based on the optional implementation of S240, the current heading angle can be calculated by the ratio of $X_1$ to $Z_1$.

Before the current heading angle matching the currently processed road surface point is determined, an estimated pixel coordinate of the currently processed road surface point in a pixel coordinate system may also

be obtained by $\begin{pmatrix} u_{estimated} \\ v_{estimated} \\ 1 \end{pmatrix} = K \begin{pmatrix} X_1/Z_1 \\ Y_1/Z_1 \\ 1 \end{pmatrix}$,

where $X_1$, $Y_1$, and $Z_1$ represent estimated three-dimensional coordinates, $u_{estimated}$ and $v_{estimated}$ represent estimated pixel coordinates, and $K$ represents the intrinsic parameter matrix of the camera. The estimated pixel coordinate of the currently processed road surface point is compared with the actual pixel coordinate of the currently processed road surface point to determine whether the estimated pixel coordinates of the currently processed road surface point satisfy an accuracy requirement. A matching current heading angle is determined for a currently processed road surface point satisfying the accuracy requirement. The accuracy requirement may, for example, mean that an error between the estimated pixel coordinates and the actual pixel coordinates does not exceed a set number of pixels (for example, 2 pixels).

Since the depth estimation value of the currently processed road surface point is obtained based on the first height value of the camera from the ground, and the ground in a farmland environment is irregular, as shown in FIG. 2C, a point whose y-axis coordinate is consistent with the first height value of the camera from the ground always exists, as shown by point B in FIG. 2C. Then, under the premise of $D = H_c \tan(\theta_c + \beta)$, only the depth estimation value of point B is calculated correctly, and the depth estimation values of the other points have certain errors. The camera coordinate system obtained by the

formula $\begin{pmatrix} u_{estimated} \\ v_{estimated} \\ 1 \end{pmatrix} = K \begin{pmatrix} X_1/Z_1 \\ Y_1/Z_1 \\ 1 \end{pmatrix}$ may be

projected into the pixel coordinate system to obtain the estimated pixel coordinate, and the estimated pixel coordinate is compared with the actual pixel coordinate of the currently processed road surface point. If the two completely coincide, it indicates that the accuracy is reliable; otherwise, it is considered that the calculated depth estimation value and the estimated y-axis coordinate have errors.

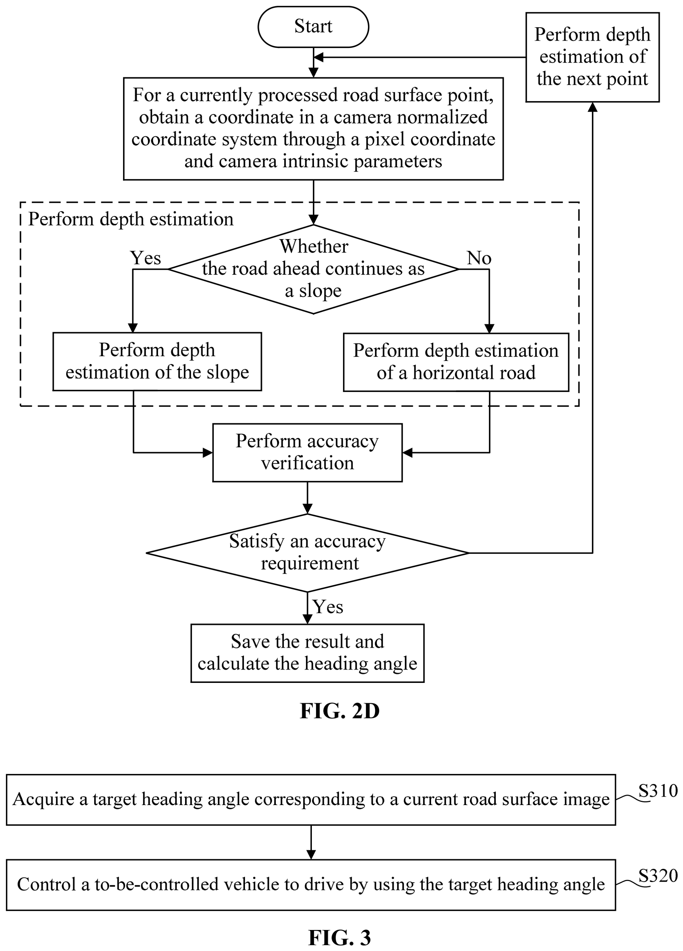

FIG. 2D is a flowchart of the application of a depth estimation method. The flow includes the following: For a currently processed road surface point, a coordinate in a camera normalized coordinate system is obtained through a pixel coordinate and camera intrinsic parameters, and depth estimation is performed to determine whether the road ahead continues as a slope. If yes, depth estimation of the slope is performed. If no, depth estimation of a horizontal road is performed. Accuracy verification is performed on the depth estimation result. For a currently processed road surface point satisfying the accuracy requirement, the calculated heading angle information may be saved. If the accuracy requirement is not satisfied, depth estimation of a next currently processed road surface point may be performed, and the operation of obtaining a coordinate in the camera normalized coordinate system through a pixel coordinate and camera intrinsic parameters is returned and executed until all currently processed road surface points are processed.

In S260, a target heading angle matching the current road surface image is determined according to multiple current heading angles corresponding to the multiple currently processed road surface points.

In the technical solution of the embodiment of the present application, a current road surface image in front of a to-be-controlled vehicle is acquired by using a camera disposed on the to-be-controlled vehicle, and multiple currently processed road surface points are determined according to the current road surface image. The position state of a currently processed road surface point, a first height value of the camera from the ground, a preset parameter of the camera, and description information of the currently processed road surface point in the current road surface image are acquired, and the preset parameter of the camera also includes an installation pitch angle and an intrinsic parameter matrix. The depth estimation value of the currently processed road surface point is determined according to the position state, the first height value, the preset parameter, and the description information. Coordinate system conversion is performed on the depth estimation value according to the installation pitch angle, the intrinsic parameter matrix, the depth estimation value, the first height value, and actual pixel coordinates of the currently processed road surface point to obtain estimated three-dimensional coordinates of the depth estimation value in a camera coordinate system, and an X-axis coordinate value and a Z-axis coordinate value are acquired from the estimated three-dimensional coordinates. The ratio of the X-axis coordinate value to a Z-axis coordinate value is determined as the current heading angle matching the currently processed road surface point. A target heading angle matching the current road surface image is determined according to multiple current heading angles corresponding to the multiple currently processed road surface points. With the preceding method, the problem in the related art of poor depth estimation accuracy due to reliance on three-dimensional reconstruction when capturing is performed along the visual axis, or poor depth estimation accuracy due to the reliance on the training sample size where an insufficient training sample size leads to poor model training performance, is solved, and more accurate estimated depth information is obtained, thereby improving the accuracy of the navigation angle during vehicle travel.

Embodiment three

FIG. 3 is a flowchart of a vehicle driving control method according to embodiment three of this application. This embodiment is implemented based on the preceding method for calculating a vehicle heading angle in a road surface environment of farmland and is applicable to the case where navigation and driving control are performed on a vehicle. The method may be executed by a vehicle driving control apparatus. The vehicle driving control apparatus may be implemented in the form of hardware and/or software and may be configured in an electronic device, such as a vehicle control of a vehicle. As shown in FIG. 3, the method includes S310 and S320.

In S310, a target heading angle corresponding to a current road surface image is acquired.

In S320, a to-be-controlled vehicle is controlled to drive by using the target heading angle.

The technical solution of this embodiment is based on the method for calculating a vehicle heading angle in a road surface environment of farmland in the preceding embodiment. In the technical solution, a target heading angle corresponding to a current road surface image is acquired, and a to-be-controlled vehicle is controlled to drive by using the target heading angle. In this manner, higher-accuracy estimated depth information is acquired, and more accurate heading information is calculated based on the high-accuracy estimated depth information to improve navigation accuracy during vehicle travel.

Embodiment four

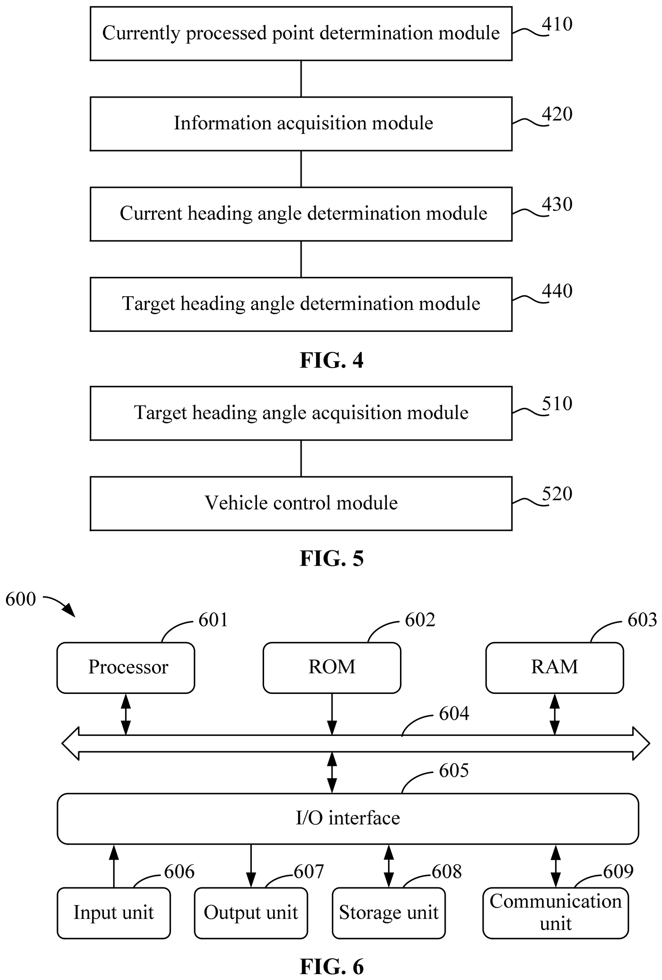

FIG. 4 is a diagram illustrating the structure of an apparatus for calculating a vehicle heading angle in a road surface environment of farmland according to embodiment four of this application. As shown in FIG. 4, the apparatus includes a currently processed point determination module 410, an information acquisition module 420, a current heading angle determination module 430, and a target heading angle determination module 440.

The currently processed point determination module 410 is configured to acquire a current road surface image in front of a to-be-controlled vehicle by using a camera disposed on the to-be-controlled vehicle and determine multiple currently processed road surface points according to the current road surface image.

The information acquisition module 420 is configured to acquire the position state of each currently processed road surface point, a first height value of the camera from ground, a preset parameter of the camera, and description information of each currently processed road surface point in the current road surface image.

The current heading angle determination module 430 is configured to determine the depth estimation value of each currently processed road surface point according to the position state, the first height value of the camera from the ground, the preset parameter, and the description information and determine a current heading angle matching each currently processed road surface point according to the depth estimation value.

The target heading angle determination module 440 is configured to determine a target heading angle matching the current road surface image according to multiple current heading angles corresponding to the multiple currently processed road surface points.

In the technical solution of the embodiment of this application, a current road surface image in front of a to-be-controlled vehicle is acquired by using a camera disposed on the to-be-controlled vehicle, and multiple currently processed road surface points are determined according to the current road surface image; the position state of a currently processed road surface point, a first height value of the camera from the ground, a preset parameter of the camera, and description information of the currently processed road surface point in the current road surface image are acquired; the depth estimation value of the currently processed road surface point is determined according to the position state, the first height value, the preset parameter, and the description information, and a current heading angle matching the currently processed road surface point is determined according to the depth estimation value. Since the position state of each currently processed road surface point and the parameters of the camera are considered, the problem in the related art of poor depth estimation accuracy due to reliance on three-dimensional reconstruction when capturing is performed along the visual axis, or poor depth estimation accuracy due to the reliance on the training sample size where an insufficient training sample size leads to poor model training performance, is solved, and more accurate estimated depth information is obtained, thereby improving the accuracy of the navigation angle during vehicle travel.

Optionally, the currently processed point determination module 410 is configured to acquire pixel coordinates of a current road surface navigation line and multiple pixel points on the current road surface navigation line according to the current road surface image and sequentially determine the multiple pixel points as the multiple currently processed road surface points.

Optionally, the preset parameter includes a focal length value of the camera and a first included angle between a visual axis direction of the camera and a vertical direction.

The description information includes an image first height value of the current road surface image and a first distance value of the currently processed road surface point from the bottom of the current road surface image.

The current heading angle determination module 430 may include a second included angle determination submodule, a vertical distance determination submodule, and a depth estimation value determination submodule.

The second included angle determination submodule is configured to determine a second included angle between a line-of-sight direction in which the camera views each currently processed road surface point and the vertical direction according to the focal length value, the first included angle, the image first height value of the current road surface image, and the first distance value.

The vertical distance determination submodule is configured to determine, based on the position state, a vertical distance between the camera and each currently processed road surface point according to the first height value of the camera from the ground.

The depth estimation value determination submodule is configured to determine the depth estimation value of each currently processed road surface point according to the second included angle and the vertical distance.

Optionally, the second included angle determination submodule is configured to determine, in an image coordinate system, a second distance value between a first mapping point of each currently processed road surface point in the current road surface image and a second mapping point of the visual axis direction of the camera in the current road surface image according to the image first height value of the current road surface image and the first distance value, determine a third included angle between the visual axis direction of the camera and the line-of-sight direction in which the camera views each currently processed road surface point according to the second distance value and the focal length value, and determine the sum of the first included angle and the third included angle as the second included angle.

Optionally, the vertical distance determination submodule may include a first vertical distance determination unit configured to directly determine the first height value of the camera from the ground as the vertical distance in a case where the position state is that each currently processed road surface point is on a horizontal road section.

Correspondingly, the depth estimation value determination submodule may include a first depth estimation value determination unit configured to determine the depth estimation value of each currently processed road surface point by $D = H_c \tan(\theta_c + \beta)$, where $D$ represents the depth estimation value, $H_c$ represents the first height value of the camera from the ground, $\theta_c + \beta$ represents the second included angle, $\theta_c$ represents the first included angle, and $\beta$ represents a third included angle.

Optionally, the vertical distance determination submodule may also include a second vertical distance determination unit configured to: in a case where the position state is that each currently processed road surface point is on an uphill road section, determine the vertical distance by $H_c - D \tan \theta_{uphill}$, where $\theta_{uphill}$ represents an uphill slope angle of the uphill road section.

Correspondingly, the depth estimation value determination submodule may also include a second depth estimation value determination unit configured to determine the depth estimation value by $D = (H_c - D \tan \theta_{uphill}) \tan(\theta_c + \beta)$.

Optionally, the vertical distance determination submodule may also include a third vertical distance determination unit configured to: in a case where the position state is that each currently processed road surface point is on a downhill road section, determine the vertical distance by $H_c + D \tan \theta_{downhill}$, where $\theta_{downhill}$ represents a downhill slope angle of the downhill road section.

Correspondingly, the depth estimation value determination submodule may also include a third depth estimation value determination unit configured to determine the depth estimation value by $D = (H_c + D \tan \theta_{downhill}) \tan(\theta_c + \beta)$.

Optionally, the depth estimation value determination submodule may also include a fourth depth estimation value determination unit configured to: in a case where the position state is that each currently processed road surface point is at a suspended point, determine a second height value of the suspended point from the ground according to an actual pixel coordinate of each currently processed road surface point in the current road surface image, where the suspended point is a pixel point obtained after the road surface is covered; and determine a depth estimation value of the suspended point according to the second included angle, the second height value, and the first height value of the camera from the ground.

Optionally, the preset parameter of the camera also includes an installation pitch angle and an intrinsic parameter matrix.

The current heading angle determination module 430 may also include an estimated three-dimensional coordinates acquisition submodule and a current heading angle determination submodule.

The estimated three-dimensional coordinates acquisition submodule is configured to perform coordinate system conversion on the depth estimation value according to the installation pitch angle, the intrinsic parameter matrix, the depth estimation value, the first height value of the camera from the ground, and an actual pixel coordinate of each currently processed road surface point to obtain an estimated three-dimensional coordinate of the depth estimation value in a camera coordinate system, and acquire an X-axis coordinate value and a Z-axis coordinate value from the estimated three-dimensional coordinates.

The current heading angle determination submodule is configured to determine the ratio of the X-axis coordinate value to a Z-axis coordinate value as the current heading angle matching each currently processed road surface point.

Optionally, the estimated three-dimensional coordinates acquisition submodule is configured to obtain a Z-axis coordinate by $Z_1 = D \cos \gamma + H_c \sin \gamma$, where $D$ represents the depth estimation value, $\gamma$ represents the installation pitch angle, and $H_c$ represents the first height value of the camera from the ground; obtain a Y-axis coordinate by $Y_1 = H_c \cos \gamma - D \sin \gamma$; and obtain an X-axis coordinate by

$$\begin{pmatrix} X_1/Z_1 \\ Y_1/Z_1 \\ 1 \end{pmatrix} = K^T \begin{pmatrix} u_{\text{actual}} \\ v_{\text{actual}} \\ 1 \end{pmatrix}, \text{where } K$$

represents the intrinsic parameter matrix, and $u_{\text{actual}}$ and $v_{\text{actual}}$ represent the actual pixel coordinate of each currently processed road surface point.

Optionally, an accuracy requirement judgment module is configured to, before the current heading angle matching the currently processed road surface point is determined, obtain an estimated pixel coordinate of each currently processed road surface point in a pixel coordinate system by

$$\begin{pmatrix} u_{\text{estimated}} \\ v_{\text{estimated}} \\ 1 \end{pmatrix} = K \begin{pmatrix} X_1/Z_1 \\ Y_1/Z_1 \\ 1 \end{pmatrix},$$

where $X_1$, $Y_1$, and $Z_1$ represent estimated three-dimensional coordinates of each currently processed road surface point in the camera coordinate system, $u_{\text{estimated}}$ and $v_{\text{estimated}}$ represent estimated pixel coordinates of each currently processed road surface point in the pixel coordinate system, and $K$ represents the intrinsic parameter matrix; compare the estimated pixel coordinate of each currently processed road surface point with the actual pixel coordinate of each currently processed road surface point to determine whether the estimated pixel coordinates of the multiple currently processed road surface point satisfy an accuracy requirement; determine a matching current heading angle for a currently processed road surface point satisfying the accuracy requirement.

Optionally, the target heading angle determination module 440 is configured to: filter out current heading angles exceeding a preset offset threshold from the multiple current heading angles to obtain remaining current heading angles; calculate the average value of the remaining current heading angles and determine the average value as a current backup heading angle matching the current road surface image; and perform coordinate system conversion on the current backup heading angle to obtain a target heading angle in a geographic coordinate system.

The apparatus for calculating a vehicle heading angle in a road surface environment of farmland provided by the embodiment of this application may execute the method for calculating a vehicle heading angle in a road surface environment of farmland provided by any embodiment of this application and has functional modules and effects corresponding to the execution method.

Embodiment five

FIG. 5 is a diagram illustrating the structure of a vehicle driving control apparatus according to embodiment five of this application. As shown in FIG. 5, the apparatus includes a target heading angle acquisition module 510 and a vehicle control module 520.

The target heading angle acquisition module 510 is configured to acquire a target heading angle corresponding to a current road surface image.

The vehicle control module 520 is configured to control a to-be-controlled vehicle to drive by using the target heading angle.

The technical solution of this embodiment is based on the method for calculating a vehicle heading angle in a road surface environment of farmland in the preceding embodiment. In the technical solution, a target heading angle corresponding to a current road surface image is acquired, and a to-be-controlled vehicle is controlled to drive by using the target heading angle. In this manner, higher-accuracy estimated depth information is acquired, and more accurate heading information is calculated based on the high-accuracy estimated depth information to improve navigation accuracy during vehicle travel.

The vehicle driving control apparatus provided by the embodiment of this application may execute the vehicle driving control method provided by any embodiment of this application and has functional modules and effects corresponding to the execution method.

Embodiment six

FIG. 6 is a diagram illustrating the structure of an electronic device 600 that can implement the embodiments of this application, and the electronic device 600 may be disposed in a vehicle. The components shown herein, their connections and relationships, and their functions, are by way of examples only and are not intended to limit implementations of this application described and/or claimed herein.

As shown in FIG. 6, the electronic device 600 includes at least one processor 601 and a memory communicatively connected to the at least one processor 601, such as a read-only memory (ROM) 602 and a random-access memory (RAM) 603. The memory stores a computer program executable by the at least one processor. The processor 601 may perform various appropriate actions and processes based on the computer program stored in the ROM 602 or loaded from a storage unit 608 into the RAM 603. The RAM 603 may also store multiple programs and data required for the operation of the electronic device 600. The processor 601, the ROM 602, and the RAM 603 are connected to each other through a bus 604. An input/output (I/O) interface 605 is also connected to the bus 604.

Multiple components in the electronic device 600 are connected to the I/O interface 605, including an input unit 606, such as a keyboard or a mouse; an output unit 607, such as multiple types of displays or speakers; a storage unit 608, such as a magnetic disk or an optical disk; and a communication unit 609, such as a network card, a modem, or a wireless communication transceiver. The communication unit 609 allows the electronic device 600 to exchange information/data with other devices through a computer network such as the Internet and/or multiple telecommunication networks.

The processor 601 may be multiple general-purpose and/or special-purpose processing components having processing and computing capabilities. Some examples of the processor 601 include but are not limited to, a central processing unit (CPU), a graphics processing unit (GPU), multiple dedicated artificial intelligence (AI) computing chips, multiple processors running machine learning model algorithms, a digital signal processor (DSP), and any suitable processors, controllers, and microcontrollers. The processor 601 executes the multiple methods and processing described above, such as the method for calculating a vehicle heading angle in a road surface environment of farmland and the vehicle driving control method.

In some embodiments, the method for calculating a vehicle heading angle in a road surface environment of farmland and the vehicle driving control method may be implemented as a computer program tangibly included in a computer-readable storage medium, such as the storage unit 608. In some embodiments, part or all of the computer program may be loaded and/or installed on the electronic device 600 via the ROM 602 and/or the communication unit 609. When the computer program is loaded into the RAM 603 and executed by the processor 601, one or multiple steps of the method for calculating a vehicle heading angle in a road surface environment of farmland and the vehicle driving control method described above may be executed. Alternatively, in other embodiments, the processor 601 may be configured to execute the method for calculating a vehicle heading angle in a road surface environment of farmland and the vehicle driving control method in any other appropriate manner (for example, by means of firmware).

The vehicle of this embodiment may also be integrated with an apparatus for calculating a vehicle heading angle in a road surface environment of farmland and a vehicle driving control apparatus.

Multiple implementations of the systems and techniques described above in this application may be implemented in a digital electronic circuit system, an integrated circuit system, a field programmable gate array (FPGA), an application specific integrated circuit (ASIC), an application specific standard product (ASSP), a system on chip system (SOC), a complex programmable logic device (CPLD), computer hardware, firmware, software, and/or combinations thereof. These multiple implementations may include an implementation in one or more computer programs that may be executable and/or interpretable on a programmable system including at least one programmable processor. The programmable processor may be special-purpose or general-purpose for receiving data and instructions from a memory system, at least one input apparatus, and at least one output apparatus and transmitting the data and instructions to the memory system, the at least one input apparatus, and the at least one output apparatus.

The computer program for implementing the method of this application may be written in any combination of one or more programming languages. These computer programs may be provided to a processor of a general-purpose computer, a special-purpose computer, or other programmable data processing apparatus such that the computer programs, when executed by the processor, cause the functions/operations specified in flowcharts and/or block diagrams to be implemented. The computer program may be executed entirely or partly on the machine, as a stand-alone software package partly on the machine and partly on a remote machine, or entirely on the remote machine or server.

In the context of this application, a computer-readable storage medium may be a tangible medium that may contain or store a computer program for use by or in conjunction with an instruction execution system, apparatus, or device. The computer-readable storage medium may include, but is not limited to, electronic, magnetic, optical, electromagnetic, infrared, or semiconductor systems, apparatuses, or devices, or any suitable combination thereof. Optionally, the computer-readable storage medium may be a machine-readable signal medium. The machine-readable storage medium may include an electrical connection based on one or more wires, a portable computer disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof.

To provide interaction with a user, the systems and techniques described herein may be implemented on a vehicle. The vehicle has a display apparatus (for example, a cathode ray tube (CRT) or a liquid crystal display (LCD) monitor) for displaying information to a user; and a keyboard and pointing apparatus (for example, a mouse or a trackball) through which a user may provide input to the vehicle. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include a client and a server. A client and a server are generally remote from each other and typically interact through a communication network. The relationship between the client and the server arises by virtue of computer programs running on respective computers and having a client-server relationship. The server, which may be a cloud server and is also referred to as a cloud computing server or a cloud host, is a host product in a cloud computing service system. The server solves the problems of difficult management and weak service scalability in the service of a related physical host and a related virtual private server (VPS).

It is to be understood that multiple forms of processes shown above may be adopted with steps reordered, added, or deleted. For example, the steps described in this application may be performed in parallel, sequentially, or in different orders, as long as the desired results of the technical solutions of this application can be achieved, and no limitation is imposed herein.

**Claims**

1. A method for calculating a vehicle heading angle in a road surface environment of farmland, comprising:

acquiring a current road surface image in front of a to-be-controlled vehicle by using a camera disposed on the to-be-controlled vehicle, and determining a plurality of currently processed road surface points according to the current road surface image;
acquiring a position state of each currently processed road surface point of the plurality of currently processed road surface points, a first height value of the camera from ground, a preset parameter of the camera, and description information of the each currently processed road surface point in the current road surface image;
determining a depth estimation value of the each currently processed road surface point according to the position state, the first height value of the camera from the ground, the preset parameter, and the description information, and determining a current heading angle matching the each currently processed road surface point according to the depth estimation value; and
determining a target heading angle matching the current road surface image according to a plurality of current heading angles corresponding to the plurality of currently processed road surface points.

2. The method according to claim 1, wherein determining the plurality of currently processed road surface points according to the current road surface image comprises:

acquiring pixel coordinates of a current road surface navigation line and a plurality of pixel points on the current road surface navigation line according to the current road surface image; and
sequentially determining the plurality of pixel points as the plurality of currently processed road surface points.

3. The method according to claim 1, wherein the preset parameter comprises a focal length value of the camera and a first included angle between a visual axis direction of the camera and a vertical direction;

the description information comprises an image first height value of the current road surface image and a first distance value of the currently processed road surface point from a bottom of the current road surface image; and
determining the depth estimation value of the each currently processed road surface point according to the position state, the first height value of the camera from the ground, the preset parameter, and the description information comprises:

determining a second included angle between a line-of-sight direction in which the camera views the each currently processed road surface point and the vertical direction according to the focal length value, the first included angle, the image first height value of the current road surface image, and the first distance value;

determining, based on the position state, a vertical distance between the camera and the each currently processed road surface point according to the first height value of the camera from the ground; and

determining the depth estimation value of the each currently processed road surface point according to the second included angle and the vertical distance.

4. The method according to claim 3, wherein determining the second included angle between the line-of-sight direction in which the camera views the each currently processed road surface point and the vertical direction according to the focal length value, the first included angle, the image first height value of the current road surface image, and the first distance value comprises:

determining, in an image coordinate system, a second distance value between a first mapping point of the each currently processed road surface point in the current road surface image and a second mapping point of the visual axis direction of the camera in the current road surface image according to the image first height value of the current road surface image and the first distance value;

determining a third included angle between the visual axis direction of the camera and the line-of-sight direction in which the camera views the each currently processed road surface point according to the second distance value and the focal length value; and

determining a sum of the first included angle and the third included angle as the second included angle.

5. The method according to claim 3, wherein determining, based on the position state, the vertical distance between the camera and the each currently processed road surface point according to the first height value of the camera from the ground comprises:

in response to the position state being that the each currently processed road surface point is on a horizontal road section, directly determining the first height value of the camera from the ground as the vertical distance; and

determining the depth estimation value of the each currently processed road surface point according to the second included angle and the vertical distance comprises:

determining the depth estimation value of the each currently processed road surface point by $D = H_c \tan(\theta_c + \beta)$, wherein $D$

represents the depth estimation value, $H_c$ represents the first height value of the camera from the ground, $\theta_c + \beta$ represents the second included angle, $\theta_c$ represents the first included angle, and $\beta$ represents a third included angle;

or, in response to the position state being that the each currently processed road surface point is on an uphill road section, determining the vertical distance by $H_c - D \tan \theta_{uphill}$, wherein

$\theta_{uphill}$ represents an uphill slope angle of the uphill road section;

determining the depth estimation value of the each currently processed road surface point according to the second included angle and the vertical distance comprises:

determining the depth estimation value by $D = (H_c - D \tan \theta_{uphill}) \tan(\theta_c + \beta)$;

or, in response to the position state being that the each currently processed road surface point is on a downhill road section, determining the vertical distance by $H_c + D \tan \theta_{downhill}$, wherein

$\theta_{downhill}$ represents a downhill slope angle of the downhill road section;

determining the depth estimation value of the each currently processed road surface point according to the second included angle and the vertical distance comprises:

determining the depth estimation value by $D = (H_c + D \tan \theta_{downhill}) \tan(\theta_c + \beta)$.

6. The method according to claim 3, further comprising:

in response to the position state being that the each currently processed road surface point is at a suspended point, determining a second height value of the suspended point from the ground according to an actual pixel coordinate of the each currently processed road surface point in the current road surface image, wherein the suspended point is a pixel point obtained after the road surface is covered; and

determining a depth estimation value of the suspended point according to the second included angle, the second height value, and the first height value of the camera from the ground.

7. The method according to claim 1, wherein the preset parameter of the camera comprises an installation pitch angle and an intrinsic parameter matrix; and determining the current heading angle matching the each currently processed road surface point according to the depth estimation value comprises:

performing coordinate system conversion on the depth estimation value according to the installation pitch angle, the intrinsic parameter matrix, the depth estimation value, the first height value of the camera from the ground, and an actual pixel coordinate of the each currently processed road surface point to obtain an estimated three-dimensional coordinate of the depth estimation value in a camera coordinate system, and acquiring an X-axis coordinate value and a Z-axis coordinate value from the estimated three-dimensional coordinate; and determining a ratio of the X-axis coordinate value to the Z-axis coordinate value as the current heading angle matching the each currently processed road surface point.

8. The method according to claim 7, wherein performing the coordinate system conversion on the depth estimation value according to the installation pitch angle, the intrinsic parameter matrix, the depth estimation value, the first height value of the camera from the ground, and the actual pixel coordinate of the each currently processed road surface point to obtain the estimated three-dimensional coordinate of the depth estimation value in the camera coordinate system comprises:

obtaining a Z-axis coordinate by $Z_1 = D \cos \gamma + H_c \sin y$, wherein $D$ represents the depth estimation value, $y$ represents the installation pitch angle, and $H_c$ represents the first height value of the camera from the ground;
obtaining a Y-axis coordinate by $Y_1 = H_c \cos \gamma - D \sin y$; and
obtaining an X-axis coordinate by

$$\begin{pmatrix} X_1/Z_1 \\ Y_1/Z_1 \\ 1 \end{pmatrix} = K^T \begin{pmatrix} u_{actual} \\ v_{actual} \\ 1 \end{pmatrix}$$ , wherein $K$

represents the intrinsic parameter matrix, and $u_{actual}$ and $v_{actual}$ represent actual pixel coordinates of the each currently processed road surface point.

9. The method according to claim 8, before determining the current heading angle matching the each currently processed road surface point, further comprising:

obtaining an estimated pixel coordinate of the each currently processed road surface point in a pixel coordinate system by

$$\begin{pmatrix} u_{estimated} \\ v_{estimated} \\ 1 \end{pmatrix} = K \begin{pmatrix} X_1/Z_1 \\ Y_1/Z_1 \\ 1 \end{pmatrix}$$ , wherein

$X_1$, $Y_1$, and $Z_1$ represent estimated three-dimensional coordinates of the depth estimation value of the each currently processed road surface point in the camera coordinate system, $u_{estimated}$ and $v_{estimated}$ represent estimated pixel coordinates of the each currently processed road surface point in the pixel coordinate system, and K represents the intrinsic parameter matrix;
comparing the estimated pixel coordinate of the each currently processed road surface point in the pixel coordinate system with the actual pixel coordinate of the each currently processed road surface point, and determining whether estimated pixel coordinates of the plurality of currently processed road surface points satisfy an accuracy requirement; and
determining a matching current heading angle for a currently processed road surface point that satisfies the accuracy requirement.

10. The method according to claim 1, wherein determining the target heading angle matching the current road surface image according to the plurality of current heading angles corresponding to the plurality of currently processed road surface points comprises:

filtering out current heading angles exceeding a preset offset threshold from the plurality of current heading angles to obtain remaining current heading angles;
calculating an average value of the remaining current heading angles, and determining the average value as a current backup heading angle matching the current road surface image; and
performing coordinate system conversion on the current backup heading angle to obtain a target heading angle in a geographic coordinate system.

11. A vehicle driving control method, comprising:

acquiring a target heading angle corresponding to a current road surface image; and
controlling a to-be-controlled vehicle to drive by using the target heading angle;
wherein the target heading angle corresponding to the current road surface image is acquired using the method for calculating a vehicle heading angle in a road surface environment of farmland according to any one of claims 1 to 10.

12. An apparatus for calculating a vehicle heading angle in a road surface environment of farmland, comprising:

a currently processed point determination module configured to acquire a current road surface image in front of a to-be-controlled vehicle by using a camera disposed on the to-be-controlled vehicle and determine a plurality of currently processed road surface points according to the current road surface image;
an information acquisition module configured to acquire a position state of each currently processed road surface point of the plurality of currently processed road surface points, a first height value of the camera from ground, a preset parameter of the camera, and description information of the each currently processed road surface point in the current road surface image;
a current heading angle determination module configured to determine a depth estimation value of the each currently processed road surface point according to the position state, the first height value of the camera from the ground, the preset parameter, and the description information and determine a current heading angle matching the each currently processed road surface point according to the depth estimation value; and
a target heading angle determination module configured to determine a target heading angle matching the current road surface image according to a plurality of current heading angles corresponding to the plurality of currently processed road surface points.

13. A vehicle driving control apparatus, comprising:

a target heading angle acquisition module configured to acquire a target heading angle corresponding to a current road surface image; and
a vehicle control module configured to control a to-be-controlled vehicle to drive by using the target heading angle;
wherein the target heading angle corresponding to the current road surface image is acquired using the method for calculating a vehicle heading angle in a road surface environment of farmland according to any one of claims 1 to 10.

14. An electronic device, comprising:

at least one processor; and
a memory communicatively connected to the at least one processor; wherein
the memory stores a computer program executable by the at least one processor, and the computer program is configured to, when executed by the at least one processor, cause the at least one processor to execute the method for calculating a vehicle heading angle in a road surface environment of farmland according to any one of claims 1 to 10 and the vehicle driving control method according to claim 11.

15. A computer-readable storage medium storing computer instructions that, when executed by a processor, implement the method for calculating a vehicle heading angle in a road surface environment of farmland according to any one of claims 1 to 10 and the vehicle driving control method according to claim 11.

Acquire a current road surface image in front of a to-be-controlled vehicle by using a camera disposed on the to-be-controlled vehicle, and determine multiple currently processed road surface points according to the current road surface image — S110

Acquire the position state of each currently processed road surface point, a first height value of the camera from ground, a preset parameter of the camera, and description information of the each currently processed road surface point in the current road surface image — S120

Determine the depth estimation value of the each currently processed road surface point according to the position state, the first height value of the camera from the ground, the preset parameter, and the description information, and determine a current heading angle matching the each currently processed road surface point according to the depth estimation value — S130

Determine a target heading angle matching the current road surface image according to multiple current heading angles corresponding to the multiple currently processed road surface points — S140

**FIG. 1A**

**FIG. 1B**

**FIG. 1C**

**FIG. 1D**

**FIG. 1E**

**FIG. 1F**

**FIG. 1G**

**FIG. 1H**

Acquire a current road surface image in front of a to-be-controlled vehicle by using a camera disposed on the to-be-controlled vehicle, and determine multiple currently processed road surface points according to the current road surface image — S210

Acquire the position state of each currently processed road surface point, a first height value of the camera from the ground, a preset parameter of the camera, and description information of the each currently processed road surface point in the current road surface image, and the preset parameter of the camera also includes an installation pitch angle and an intrinsic parameter matrix — S220

Determine the depth estimation value of the each currently processed road surface point according to the position state, the first height value of the camera from the ground, the preset parameter, and the description information — S230

Perform coordinate system conversion on the depth estimation value according to the installation pitch angle, the intrinsic parameter matrix, the depth estimation value, the first height value of the camera from the ground, and an actual pixel coordinate of the each currently processed road surface point to obtain an estimated three-dimensional coordinate of the depth estimation value in a camera coordinate system, and acquire an X-axis coordinate value and a Z-axis coordinate value from the estimated three-dimensional coordinate — S240

Determine the ratio of the X-axis coordinate value to the Z-axis coordinate value as the current heading angle matching the each currently processed road surface point — S250

Determine a target heading angle matching the current road surface image according to multiple current heading angles corresponding to the multiple currently processed road surface points — S260

**FIG. 2A**

**FIG. 2B**

**FIG. 2C**

Start

Perform depth estimation of the next point

For a currently processed road surface point, obtain a coordinate in a camera normalized coordinate system through a pixel coordinate and camera intrinsic parameters

Perform depth estimation

Whether the road ahead continues as a slope

Yes → Perform depth estimation of the slope

No → Perform depth estimation of a horizontal road

Perform accuracy verification

Satisfy an accuracy requirement

Yes → Save the result and calculate the heading angle

**FIG. 2D**

Acquire a target heading angle corresponding to a current road surface image — S310

Control a to-be-controlled vehicle to drive by using the target heading angle — S320

**FIG. 3**

Currently processed point determination module — 410

Information acquisition module — 420

Current heading angle determination module — 430

Target heading angle determination module — 440

**FIG. 4**

Target heading angle acquisition module — 510

Vehicle control module — 520

**FIG. 5**

600

Processor — 601

ROM — 602

RAM — 603

604

605

I/O interface

Input unit — 606

Output unit — 607

Storage unit — 608

Communication unit — 609

**FIG. 6**

## INTERNATIONAL SEARCH REPORT

| International application No. |
|---|
| **PCT/CN2024/099715** |

**A.    CLASSIFICATION OF SUBJECT MATTER**

G06T7/50(2017.01)i

According to International Patent Classification (IPC) or to both national classification and IPC

**B.    FIELDS SEARCHED**

Minimum documentation searched (classification system followed by classification symbols)

IPC:G06T G01C

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, VEN, DWPI, CJFD, WFNPL, CNKI, WEB OF SCIENCE: 航向, 航向角, 横摆角, 横滚角, 侧偏角, 滚向角, 偏航角, 偏转角, 转弯角, 转向角, 姿势角, 姿态角, 纵倾角, 艏向角, 导航角, 俯仰角, 方位角, 方向角, 转角, 深度, 距离, 道路, 地面, 路径, 路面, 公路, 农田, 田地, 田垄, 摄像机, 相机, 图像, 单目, 多, 均值, 平均, 坡, 测定, 估计, 估算, 计算, 求解, 确定, 演算, 运算, depth, course angle, heading angle, field, road, vehicle, single, eye, slope

**C.    DOCUMENTS CONSIDERED TO BE RELEVANT**

| Category* | Citation of document, with indication, where appropriate, of the relevant passages | Relevant to claim No. |
|---|---|---|
| PX | CN 116777966 A (SHANGHAI HUACE NAVIGATION TECHNOLOGY LTD.) 19 September 2023 (2023-09-19)<br>claims 1-15 | 1-15 |
| A | CN 115683143 A (CHONGQING CHANG'AN AUTOMOBILE CO., LTD.) 03 February 2023 (2023-02-03)<br>entire document | 1-15 |
| A | CN 115908570 A (BEIJING YIHANG INTELLIGENT TECHNOLOGY CO., LTD.) 04 April 2023 (2023-04-04)<br>entire document | 1-15 |
| A | US 2011112767 A1 (CHUEH Kainan et al.) 12 May 2011 (2011-05-12)<br>entire document | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 August 2024** | **28 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 697 265 A1**

**INTERNATIONAL SEARCH REPORT**

| International application No. |
| --- |
| **PCT/CN2024/099715** |

**C.    DOCUMENTS CONSIDERED TO BE RELEVANT**

| Category* | Citation of document, with indication, where appropriate, of the relevant passages | Relevant to claim No. |
| --- | --- | --- |
| A | 王展青等 (WANG, Zhanqing et al.). "基于单目视觉的车距测量方法综述 (Review of Vehicle Distance Measurement Based on Monocular Vision)" <br> 科技资讯 (Science & Technology Information), No. 27, 23 September 2010 (2010-09-23), 33-38 <br> ISSN: 1672-3791, <br> text, pages 1-4 | 1-15 |
| A | 张云飞等 (ZHANG, Yunfei et al.). "基于单目视觉的测距算法 (A Range Algorithm Based on Monocular Vision)" <br> 计算机与数字工程 (Computer & Digital Engineering), <br> Vol. 48, No. 02, 20 February 2020 (2020-02-20), 356-360 <br> ISSN: 1672-9722, <br> entire document | 1-15 |

Form PCT/ISA/210 (second sheet) (July 2022)

**INTERNATIONAL SEARCH REPORT**
Information on patent family members

International application No.

**PCT/CN2024/099715**

| Patent document cited in search report | | | Publication date (day/month/year) | Patent family member(s) | | | Publication date (day/month/year) |
|---|---|---|---|---|---|---|---|
| CN | 116777966 | A | 19 September 2023 | None | | | |
| CN | 115683143 | A | 03 February 2023 | None | | | |
| CN | 115908570 | A | 04 April 2023 | None | | | |
| US | 2011112767 | A1 | 12 May 2011 | US | 8346466 | B2 | 01 January 2013 |
| | | | | JP | 2011102799 | A | 26 May 2011 |
| | | | | JP | 5379109 | B2 | 25 December 2013 |
| | | | | CA | 2720437 | A1 | 11 May 2011 |
| | | | | CA | 2720437 | C | 09 September 2014 |
| | | | | EP | 2322902 | A2 | 18 May 2011 |
| | | | | EP | 2322902 | A3 | 15 June 2016 |
| | | | | EP | 2322902 | B1 | 23 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310744488